# EUROPÄISCHE PATENTSCHRIFT

(11) **EP 1 650 075 B1**
(45) Veröffentlichungstag und Bekanntmachung des Hinweises auf die Patenterteilung: **11.01.2012**
(21) Anmeldenummer: 05024497.9
(22) Anmeldetag: 20.09.2002
(51) Int. Cl.: B60N 2/02, B64D 11/06

(54) **Steuerungs- und Energieversorgungssystem für wenigstens zwei Flugzeugsitzplätze**
Control and power supply system for at least two aeroplane seats
Système de commande et d'alimentation en énergie pour au moins deux sièges d'avion

(30) Priorität: 02.10.2001 DE 10148810
(43) Veröffentlichungstag der Anmeldung: 26.04.2006
(62) Teilanmeldung aus: 02774387.1
(73) Patentinhaber: Recaro Aircraft Seating GmbH & Co. KG, 74523 Schwäbisch Hall (DE)
(72) Erfinder: Wagner, Wolfgang, 88048 Friedrichshafen (DE)
(74) Vertreter: Daub, Thomas

(56) Entgegenhaltungen:
- EP-A1- 0 973 079
- EP-A2- 1 028 512
- GB-A- 2 318 429
- US-A- 6 094 604

## Beschreibung

Die Erfindung betrifft eine Anordnung von Aktuatoren in Flugzeugsitzplätzen mit einem Steuerungs- und Energieversorgungssystem (siehe z.B. EP 0 973 079 A1, dem Oberbegriff entsprechend).

Bei den Steuereinheiten, Antriebseinheiten und sonstigen Konfigurationsänderungselementen eines Flugzeugsitzes können folgende schwerwiegende Fehler auftreten: Lose oder abgefallene Steck- oder sonstiger Verbinder, Kabelbruch, Kurzschlüsse zu Masse oder einer anderen Versorgungsleitung, ausgefallene Steuereinheiten sowie der Ausfall von Antriebseinheiten oder Eingabeeinheiten bzw. Bedienungselementen, bei denen es sich beispielsweise um Taster, Schalter, Chipkartenleser evtl. mit einem Display handeln kann.

Der vorliegenden Erfindung liegt die Aufgabe zugrunde, ein System anzugeben, bei dem die Funktion der Antriebseinheiten bzw. sonstiger Konfigurationsänderungselemente sichergestellt ist.

Diese Aufgabe wird erfindungsgemäß durch die Merkmale des unabhängigen Patentanspruchs gelöst.

Vorteilhafte Ausgestaltungen der Erfindung sind in den abhängigen Anspruch gekennzeichnet.

Die Erfindung sieht ein Redundanzkonzept vor, das fehlertolerant ist.

Das erfindungsgemäße System besteht aus einer für den jeweiligen Flugzeugsitzplatz angepaßten Anzahl von Antriebseinheiten und Überwachungseinheiten, bzw. Aktuatoren, wobei diese Elemente von wenigstens zwei vorzugsweise benachbarten Flugzeugsitzplätzen in Form einer BusStruktur angeordnet sind. Das System kann aber auch die Elemente von drei oder mehr Flugzeugsitzplätzen umfassen.

Die Erfindung sieht ein System der Abkopplung defekter Teile aus einer Busstruktur vor. Bei dem System der Abkopplung defekter Teile aus einer Busstruktur sind bevorzugt alle Aktuatoren sowie die Bedienelemente mit Hilfe der Datenleitungseinrichtung in Reihe geschaltet.

Bei der Reihenschaltung aller Aktuatoren und Bedienelementen sind die beiden Enden der Datenleitungseinrichtung an der Steuereinheit zu einem physikalischen Ring verbunden. Erfindungsgemäß ist vorgesehen, dass sich in den Aktuatoren Elemente zur Unterbrechung der zu- und abgehenden Leitungen befinden. Dies trifft sowohl für die Datenleitungen als auch für die Versorgungsleitungen zu.

Wenn ein Kurzschluss z.B. zwischen Plus und Minus der Versorgungsleitungen im Kabelbaum der Datenleitungseinrichtung zwischen zwei Aktuatoren auftritt, hätte dies bei herkömmlichen Systemen einen Kurzschluss der Netzteile und damit den Ausfall der kompletten Sitzgruppe zur Folge. Dies wird gemäß der vorliegenden Erfindung durch die Unterbrechungselemente vermieden, die in diesem Fall geöffnet sind, womit das kurzgeschlossene Leitungsstück zwischen den beiden Aktuatoren abgeschaltet ist. Hierdurch wandelt sich der Bus von der Ringstruktur in eine Struktur mit zwei Stichleitungen.

Dies wird von der Steuereinheit erkannt, die gegebenenfalls ihre Anschlüsse entsprechend konfiguriert.

Dabei kann vorgesehen sein, die durch die Unterbrechungselemente aufgetrennte Datenleitungseinrichtung mit ihrem Wellenwiderstand durch weitere Kontakte der Unterbrechungselemente bzw. durch zusätzliche Elemente abzuschließen.

Da die Datenleitungseinrichtung im Einschaltmoment durch die Unterbrechungselemente in den Aktuatoren quasi zerstückelt ist, wird der Ring durch eine entsprechende Start-Routine geschlossen.

Das erfindungsgemäße System enthält für die wenigstens zwei Flugzeugsitzplätze nur eine einzige gemeinsame Steuereinheit. Diese Steuereinheit steuert über eine Datenleitungseinrichtung die Aktuatoren. Über sein Bedienelement, das über eine Intelligenz oder zumindest über einen Treiber für die Datenleitungseinrichtung verfügt, steuert der Benutzer die für seinen Sitz relevanten Aktuatoren. Dabei werden die Daten von dem Bedienelement über die von allen Elementen genutzte Datenleitungseinrichtung an die Steuereinheit geleitet. Die Steuereinheit löst dann wiederum über die Datenleitungseinrichtung bei den Aktuatoren eine entsprechende Reaktion aus. Diese Reaktion wird bevorzugt durch Rückmeldungen der Aktuatoren über die Datenleitungseinrichtung an die Steuereinheit gemeldet. Diese kontrolliert und regelt gegebenenfalls den gesamten Bewegungsablauf.

Vorzugsweise ist ferner vorgesehen, dass die Aktuatoren intelligent sind und dass ihnen im Fehlerfall der Steuereinheit ein erweitertes Aufgabenspektrum zugewiesen wird. Fällt die Steuereinheit aus irgendeinem Grunde aus oder gibt diese wegen eines Defektes unlogische Daten aus, so wird von den Aktuatoren diese Fehlfunktion erkannt. In einer speziellen Routine beschließen sie, die Funktion der Steuereinheit durch ihre verteilte Intelligenz zu übernehmen. Jeder Aktuator meldet seine für die restlichen Aktuatoren relevanten Daten auf die Datenleitungseinrichtung. Er liest die für sich relevanten Daten von der Datenleitungseinrichtung ein und reagiert entsprechend intelligent. Eine oder mehrere Einheiten lesen auch die Daten der oder des Bedienelementes, reagieren entsprechend und melden gegebenenfalls die relevanten Daten an die anderen Aktuatoren weiter. Es kann auch vorgesehen sein, dass ein Aktuator die Funktion der Steuereinheit komplett übernimmt.

Weitere Einzelheiten der Erfindung ergeben sich aus der nachfolgenden Beschreibung bevorzugter Ausführungsformen sowie anhand der Zeichnung. Dabei zeigen:
- Figur 1: ein Bussystem und
- Figur 2: eine Schaltung, in der symbolisch nur einer der Aktuatoren dargestellt ist.

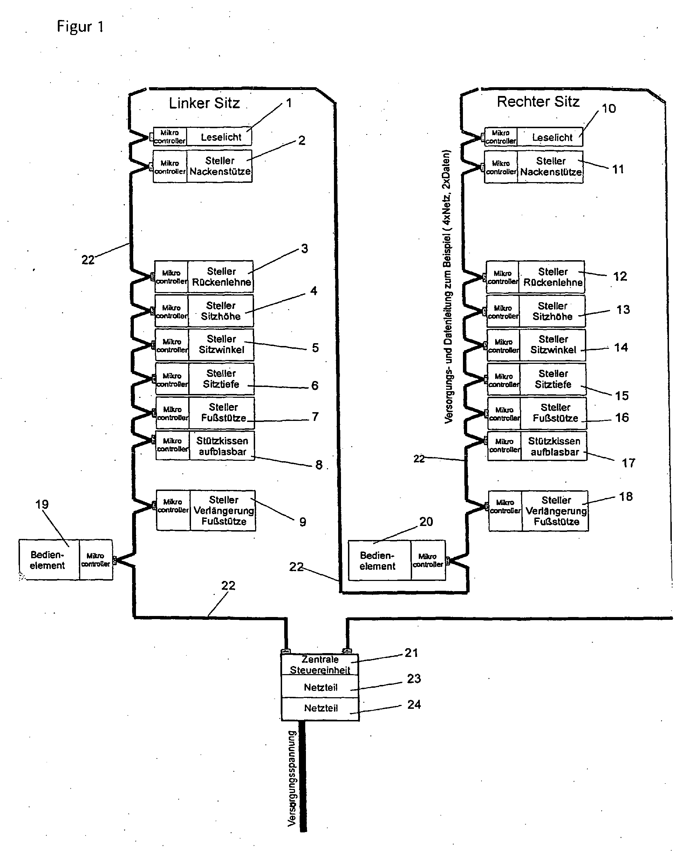

Bei dem in Figur 1 dargestellten System sind die Elemente eines linken Fluggastsitzplatzes und eines rechten Fluggastsitzplatzes jeweils über eine Datenleitungseinrichtung 22 mit einer gemeinsamen Steuereinheit 21 verbunden. Bei den Aktuatoren 1 bis 9 des linken Sitzes und 10 bis 18 des rechten Sitzes kann es sich um folgende Elemente handeln: Leselicht 1, 10, Kopfstützen-Aktuator 2, 11, Rückenlehnen-Aktuator 3, 12, Sitzhöhen-Aktuator 4, 13, Sitzwinkel-Aktuator 5, 14, Sitztiefen-Aktuator 6, 15, Fußstützen-Aktuator 7, 16, Luftsystem 8, 17, Fußstützen-Aktuator extern 9, 18. Die Aktuatoren sind jeweils mit einem Mikrocontroller versehen, der die Intelligenz trägt und die Kommunikation bewerkstelligt.

Über ein Bedienelement 19 oder 20 werden die für den linken bzw. rechten Sitz vorgesehenen Aktuatoren 1 bis 9 bzw. 10 bis 18 gesteuert. Dabei werden die Daten von dem Bedienungselement 19 bzw. 20 über die Datenleitungseinrichtung 22 an die Steuereinheit 21 geleitet. Die Steuereinheit 21 löst dann wiederum über die Datenleitungseinrichtung 22 bei den jeweiligen Aktuatoren eine entsprechende Reaktion aus. Diese Reaktion wird wiederum durch Rückmeldung der Aktuatoren über die Datenleitungseinrichtung 22 an die Steuereinheit 21 gemeldet, die den gesamten Bewegungsablauf kontrolliert und regelt.

Figur 1 zeigt ein System mit einer ringförmigen Busstruktur, die durch zwei Flugzeugsitzplätze geführt wird. Hierzu sei erwähnt, dass das System auch für drei oder mehr Flugzeugsitzplätze verwendbar ist.

Der Ring enthält bevorzugt vier Netzleitungen und zwei Datenleitungen. Wenn zwei Netzleitungen im Uhrzeigersinn und die beiden anderen Netzleitungen im Gegenuhrzeigersinn durch den Bus laufen, hat dies den Vorteil, dass eine Redundanz bezüglich der Versorgungsleitungen besteht.

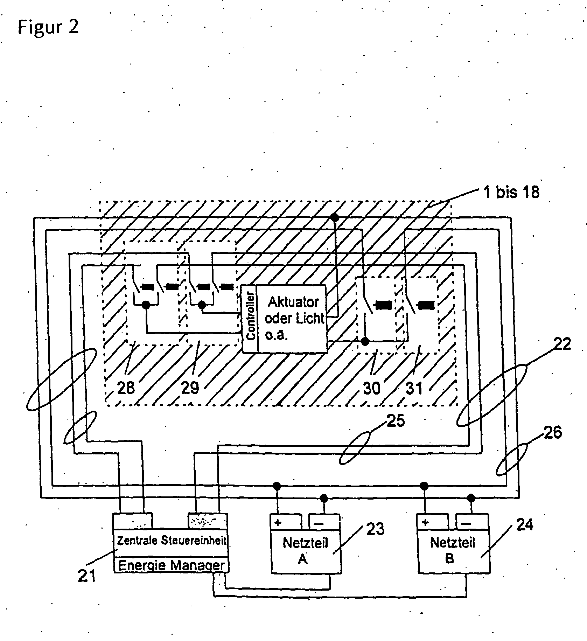

Figur 2 zeigt eine Schaltung für die in Figur 1 dargestellte Busstruktur. In der Figur ist gestrichelt einer der Aktuatoren 1 bis 18 dargestellt. In den Aktuatoren 1 bis 18 befinden sich Elemente 28 bis 31 zur Unterbrechung der zu- und abgehenden Leitungen. Das Element 28 unterbricht die zugehende Datenleitung, während das Element 29 die abgehende Datenleitung unterbricht. Entsprechende Funktionen sind den Elementen 30 und 31 für die Versorgungsleitungen zugeordnet.

Die Unterbrechungselemente haben die folgende Funktion: Angenommen, ein Kurzschluss zwischen plus und minus der Versorgungsleitungen 26 im Kabelbaum der Datenleitungseinrichtung 22 würde zwischen dem Aktuator 3 und dem Aktuator 4 auftreten. Dies würde einem Kurzschluss der Netzteile 23 und 24 und damit dem Ausfall der kompletten Sitzgruppe gleichkommen. Ein solcher Kurzschluss wird durch das erfindungsgemäße System kompensiert. In dem dargestellten Beispiel sind die Unterbrechungselemente 31 und 30 in dem Aktuator 3 geöffnet. Damit ist das kurzgeschlossene Leitungsstück zwischen den beiden Aktuatoren abgeschaltet. Der Bus wandelt sich von der Ringstruktur in eine Struktur mit zwei Stichleitungen. Die Steuereinheit erkennt dies und konfiguriert entsprechend ihre Anschlüsse.

Da die Datenleitungseinrichtung 22 im Einschaltmoment durch die Unterbrechungselemente 28 bis 31 in den Aktuatoren 1 bis 18 quasi zerstückelt sind, muss der Ring durch eine entsprechende Start-Routine geschlossen werden.

## Patentansprüche

1. Anordnung von Aktuatoren von wenigstens zwei vorzugsweise benachbarten Flugzeugsitzplätzen mit einem Steuerungs- und Energieversorgungssystem, wobei
die Aktuatoren (1 bis 9) eines Flugzeugsitzplatzes und die Aktuatoren (10 bis 18) wenigstens eines weiteren Flugzeugsitzplatzes über eine Datenleitungseinrichtung (22) mit einer gemeinsamen Steuereinheit (21) verbunden sind, **dadurch gekennzeichnet,**
**dass** alle Aktuatoren (1 bis 18) in Reihe geschaltet sind,
und **dass** alle Aktuatoren (1 bis 18) mit Elementen (28 bis 31) zur Unterbrechung der zu- und abgehenden Leitungen versehen sind.

2. Anordnung nach Anspruch 1,
**dadurch gekennzeichnet,**
**dass** sowohl Unterbrechungselemente (28, 29) für die Datenleitungen als auch Unterbrechungselemente (30, 31) für die Versorgungsleitungen vorgesehen sind.

## Claims

1. Arrangement of actuators for at least two preferably adjacent aircraft seat spaces, having a control and power supply system, wherein the actuators (1 to 9) of one aircraft seat space and the actuators (10 to 18) of at least one further aircraft seat space are connected via a data line device (22) to a common control unit (21),
**characterized**
**in that** all the actuators (1 to 18) are connected in series,
and **in that** all the actuators (1 to 18) are provided with elements (28 to 31) for interruption of the feed and return lines.

2. Arrangement according to Claim 1,
**characterized**
**in that** both interruption elements (28, 29) for the data lines and interruption elements (30, 31) for the supply lines are provided.

## Revendications

1. Agencement d'actionneurs d'au moins deux sièges d'avion de préférence voisins, avec un système de commande et d'alimentation en énergie ;
les actionneurs (1 à 9) d'un siège d'avion et les actionneurs (10 à 18) d'au moins un siège d'avion supplémentaire étant raccordés à une unité de commande (21) commune par le biais d'un dispositif de transfert de données (22) ;
**caractérisé en ce que** :
tous les actionneurs (1 à 18) sont branchés en série ; et
tous les actionneurs (1 à 18) sont pourvus d'éléments (28 à 31) d'interruption des câbles entrants et sortants.

2. Agencement selon la revendication 1, **caractérisé en ce qu'**il comprend tant des éléments interrupteurs (28, 29) pour les câbles de données que des éléments interrupteurs (30, 31) pour les câbles d'alimentation.
